(19) Europäisches Patentamt

European Patent Office

Office européen des brevets

(11) **EP 0 815 930 A1**

(12) **EUROPEAN PATENT APPLICATION**

(43) Date of publication:
**07.01.1998 Bulletin 1998/02**

(51) Int Cl.6: **B01F 11/02**, B01F 3/08, B01J 19/10

(21) Application number: **97304673.3**

(22) Date of filing: **27.06.1997**

(84) Designated Contracting States:
**AT BE CH DE DK ES FI FR GB GR IE IT LI LU MC NL PT SE**
Designated Extension States:
**AL LT LV RO SI**

(30) Priority: **27.06.1996 JP 167297/96**
**26.07.1996 JP 197763/96**

(71) Applicants:
• **SG Engineering Co., Ltd.**
  **Minato-ku (JP)**

• **Miracle Co., Ltd.**
  **Meguro-ku (JP)**

(72) Inventor: **Naito, Tomihisa**
**Odawara-shi, Kanagawa-ken (JP)**

(74) Representative: **Leale, Robin George et al**
**Frank B. Dehn & Co.,European Patent Attorneys,**
**179 Queen Victoria Street**
**London EC4V 4EL (GB)**

(54) **Method and apparatus for particulation**

(57)    The purpose of the present invention is to present a method of and an apparatus for particulating that can particulate various substance with good performance, has a high cleanability, is easy to make compactly and keeps various costs low. To achieve this purpose, a substance to be particulated and a liquid are passed through a chamber member (22) having a relatively large cross sectional area to a member (24) provided with portions of very small cross-sectional area generating an ultra sonic vibration by resonating the chamber member and these portions with the liquid, so that stress is repeatedly exerted on the substance to be particulated. The substance to be particulated and the liquid are passed through the chamber member to a small diameter channel member provided with channels having a very small cross sectional area composed of a plurality of straight channels. The cross-sectional area of each channel is selected in accordance with a prescribed particle size distribution.

Fig.1

# Description

The present invention relates to a method and apparatus for particulation, which is of application in the fields of dispersing, emulsifying, mixing, crushing and other processing fields.

It is well-known that once some substances are particulated, for example, in the fields of dispersing, emulsifying, mixing, and crushing, their innate functions are brought into full play so that very favourable results can be obtained.

There has been a significant desire hitherto for the development of a method and apparatus for particulating various substances.

As for the particulating apparatus, since the purity (contaminationlessness) of the substance is generally required to be extremely high, the component in which the particulated particles are located should be able to be cleaned sufficiently.

Furthermore, since conventional particulating apparatus has to generate high pressure, the apparatus is unavoidably large and expensive and needs to be provided with a high pressure pump or a compressor. Thus, for conventional particulating apparatus, size reduction and an improvement in cleanability are strongly desired by those skilled in the art.

Methods of particulation of substances in a liquid by generating cavitation through collision of the liquid, disturbance, turbulent flow and enlargement or contraction of flow are disclosed, for example, in Japanese Laid-open Patent Application No. 2-261525, which discloses a technique wherein holes and channels are provided on a nozzle disk in a generator which acts as a particulating component for the substance to be particulated. In U.S. Patent Specification No. 4,533,254, a combination of nozzle holes and a film-thin chamber is disclosed. Particulation can be achieved by such prior art.

However, according to the prior art, components for particulating a substance or substances are composed of channels forming grooves or film-thin spaces with a disk and/or nozzles in a chamber, so that stress concentration occurs at turning points and may cause abrasion at such points.

In addition, a large contact area (contacting surface area) of the above mentioned component with a liquid or the substance to be particulated may result in low cleanability.

Furthermore, since the apparatus for compressing the liquid is a compressor or a pump, if pressure is required for a prescribed particulation, the apparatus may need to be enlarged.

Moreover, the necessity of high maintenance costs resulting from the low cleanability, high manufacturing cost of the enlargement or providing high performance to accommodate high pressure, means that various costs of the conventional particulating apparatus may be expensive.

It is highly desirable if the particle size of the particulated substance can be determined as desired (so-called "particle size determination"), but this is impossible according to the prior art.

The present invention, at least in its preferred embodiments, proposes, in consideration of the above mentioned disadvantageous points of the prior art, a particulating method and apparatus, having a good particulating ability for various substances, having high cleanability, and being easy to make compactly and at relatively low cost.

After varied research, the inventor has developed a particulation technique based on acoustic theory or resonance theory, which technique is entirely different from conventional particulation based on cavitation theory. Such particulation based on acoustic theory or resonance theory causes a very favourable result. The present invention relates to a method and an apparatus for particulation based on this theory (which is entirely different from the conventional cavitation theory of particulation).

According to a first aspect of the present invention, there is provided a method for particulation, wherein a substance to be particulated is mixed with a liquid and particulated, comprising the step of:

passing the substance and the liquid through a chamber member having a relatively large cross-sectional area to a member, provided with portions having a very small cross-sectional area;

in said passing step, generating an ultra sonic vibration by resonating the chamber member and the portions having very small cross sectional area with the liquid, thereby repeatedly exerting stress on the substance to be particulated.

According to a second aspect of the present invention, there is provided apparatus for particulation by mixing a substance with a liquid and particulating the substance, comprising:

a chamber member having a relatively large cross sectional area;
a member provided with portions having very small cross sectional area; and
a supply system for supplying the substance to be particulated and the liquid to said chamber member and said member provided with the portions having very small cross sectional area,
said chamber member and said member provided with the portions having very small cross sectional area being arranged so as to generate an ultra sonic vibration by resonance of said chamber member and the portions having very small cross sectional area, in order to exert stress repeatedly on the substance to be particulated.

In applying the method and/or the apparatus for particulation according to the present invention, a cylindrical shape having an inner surface is desirable for the member provided with the portions of very small cross sectional area. Furthermore, a small diameter metal cylindrical member such as an injection needle is suitable for the cylindrical shape having an inner surface.

In applying the method and/or the apparatus for particulation according to the present invention, it is desirable for the member provided with portions of very small cross sectional area to comprise a plurality of straight channels. For the above mentioned member which has a plurality of straight channels, a plurality of bundled small diameter metal cylindrical members or a plurality of bundled small diameter metal cylindrical members sintered together with a powdered alloy, or a solid cylindrical member having plurality of through holes formed therein using an electric discharge machining technique, are desirable.

According to the present invention, an ultra sonic vibration is generated by resonance of the chamber member and the portions having very small cross sectional area with the liquid when the substance to be particulated and the liquid pass through the chamber member and the member provided with portions of very small cross sectional area. In other words, when the substance to be particulated and the liquid pass through the member provided with portions of very small cross-sectional area, a vibration corresponding to so-called "flow noise" is generated. The vibration, having a resonance frequency of vibration generated from the above mentioned vibration and the chamber member, propagates in the chamber. An ultra sonic vibration is generated because the resonance vibration frequency in the chamber member and the portions of very small cross sectional area with the liquid is extremely high. When the substance to be particulated and the liquid pass through the chamber member and the member provided with portions of very small cross sectional area, a bending stress and/or a shear stress are exerted on the substance by cavitation or collision with the side walls. Here, the present invention explains that as a result of the generation of the ultra sonic vibration, the repetition frequency of the occurrence of the bending stress and/or the shear stress on the substance becomes so great as to be absolutely unattainable with conventional particulating apparatus.

Since the frequency of exertion of bending stress and/or shear stress on the substance is dramatically increased, ideal particulation of the substance is achieved.

In the present invention, if the inner diameter, lenqth of the member provided with portions of very small cross sectional area and the liquid pressure are properly established, a characteristic of the particle size distribution of the particulated substance, when represented in a graph, becomes very sharp, as does the particle size distribution. Thus, the particle sizes of the particulated substance are uniform.

In other words, "particle size determination" which is desirable in a particulation process, but impossible to realize with the prior art, becomes possible by means of the present invention. By properly establishing the inner diameter of the member provided with portions of very small cross sectional area and the pressure of the liquid passing through the member, it becomes possible to obtain a particulated substance with a prescribed particle size.

If the length and the size of the member provided with portions of very small cross sectional area is long and/or large, a characteristic of the particle size distribution represented in a graph will be sharp. Thus, precise particle size determination can be achieved.

Applying the method and the apparatus of the invention, the only parts which need to be cleaned and which contact the particulated substance are the chamber member and the member provided with portions of very small cross sectional area. Therefore, only these two parts need to be cleaned after the particulation, and thus, the cleanability and the cleaning efficiency according to the invention are far better than the cleanability and the cleaning efficiency of the prior art.

For the member provided with portions of very small cross sectional area, if a very tiny member is used, as will be mentioned later, the contact area of this member with the particulated substance is extremely small and the cleanability is much improved.

Further, in applying the method and the apparatus of the invention, shape, size and other various parameters are settled once to generate an ultra sonic vibration by resonance of the chamber member, the portions of very small cross sectional area and the liquid, any additional high pressure which is required in a conventional particulating apparatus is no longer necessary. Thus, a reduction in size of the whole apparatus is very easily achieved.

From a further aspect, the invention provides an ultra sonic vibration generating apparatus, comprising:

a chamber member having a relatively large cross sectional area;
a member provided with portions having very small cross sectional area; and
a supply system for supplying liquid to said chamber member and said member provided with portions having very small cross sectional area,
said chamber member and said member provided with the portions having very small cross sectional area being arranged so as to generate an ultra sonic vibration by resonance of said chamber member and the portions having very small cross sectional area with said liquid.

Therefore, if the shape, size of the chamber member and the member provided with portions of very small cross sectional area, the pressure of the liquid passing through and other various parameters are settled once, proper ultra sonic vibration can be obtained very easily.

Considering that piezoelectric elements and high frequency alternating currents are indispensable for obtaining an ultra sonic vibration according to the prior art, the present invention is very useful and of application in the field of sonic vibration.

According to yet a further aspect of the invention, there is provided a method for particulation, wherein a substance to be particulated is mixed with a liquid and particulated, comprising the step of:

passing the substance to be particulated and the liquid through a chamber member having a relatively large cross sectional area to a small diameter channel member having channels of a very small cross sectional area, so that when the liquid passes through the chamber member and the plurality of channels having very small cross- sectional area, the substance is particulated;
the channels of very small cross sectional area in the small diameter channel member being composed of a plurality of straight channels; and
the cross-sectional area of each of the plurality of straight channels is selected so as to correspond to a prescribed particle size distribution.

According to yet a further aspect of the invention, there is provided apparatus for mixing a substance to be particulated with a liquid and particulating the substance, comprising:

a generator for particulating the substance; and a supply system for supplying the substance and the liquid to the generator,
said generator including a chamber member having a relatively large cross sectional area and a small diameter channel member having channels of very small cross sectional area;
said substance being particulated when the liquid passes through the chamber member and the plurality of channels having very small cross sectional area;
the channels of very small cross sectional area in the small diameter channel member comprising a plurality of straight channels; and
the cross sectional area of each of said plurality of straight channels corresponding to a prescribed particle size distribution of the particulated substance.

In the particulating apparatus of the present invention, it is desirable that a small diameter channel is installed in a position relative to the generator, which channel can be separated into two divided parts, and that chamber members engage with the small diameter channel member, in front and behind, respectively.

According to the present invention, constructions of which are explained in the above, since an ultra sonic vibration is generated by resonance of the member having a relatively large cross sectional area and a plurality of channel members having very small cross sectional area, many kinds of stresses are exerted repeatedly on the substance to be particulated. In the plurality of channels of very small cross sectional area, once cavitation is induced, the effect of the cavitation covers all areas of the cross sectional area of the channel, so that the shear stress occurring due to the cavitation can be positively operated on the substance to be particulated.

In a stage that shear stress operates on the substance, it becomes possible to make the particle size a prescribed particle size distribution by selecting each cross sectional area of the plurality of straight channels of the small diameter channel member, thus enabling "particle size determination".

In brief, the present invention comprises the steps of: mixing the material to be particulated with a liquid; transmitting with pressure to a generator, and generating ultra sonic vibration by resonance of a member having a relatively large cross sectional area in the chamber member and a plurality of small diameter straight channels of very small cross sectional area with the liquid and particulating by repeatedly exerting stress on the substance to be particulated. Each cross sectional area of the straight channels may be selected so that the substance to be particulated corresponds to the prescribed particle size distribution.

Here, the small diameter channel members, which can be separated into two divided parts, are installed in a position relative to the generator, and chamber members engage with the small diameter channel members in front and behind respectively. The alignment makes cleaning effective, fulfilling the required cleanability for particulation technology.

From a broad aspect, the invention provides a method for particulation of a substance, the substance being mixed with a liquid, wherein the mixture is supplied to a chamber of relatively large cross-sectional area and passes from the chamber through a portion of very small cross-sectional area.

Some embodiments of the present invention will now be described by way of example only and with reference to the accompanying drawings, in which:

Fig. 1 is a block diagram showing a first embodiment of the present invention;
Fig. 2 is a perspective view of a different embodiment from that of Fig. 1, showing the part with portions of very small cross sectional area;
Fig. 3 is another perspective view of the member with portions of very small cross sectional area, but differing from the embodiments of Fig. 1 and Fig. 2;
Fig. 4 is a block diagram of a model of the apparatus of the first example;
Fig. 5 is a numerical table relating to various channels formed in the apparatus shown in Fig. 4;
Fig. 6 is a side-view showing a member or a needle for injection having a very small cross sectional area, used in the second example;

Fig. 7 is a particle size distribution chart derived from measurement of the second example of the present invention;

Fig. 8 is a particle size distribution chart derived from measurement of an embodiment of the third example of the present invention;

Fig. 9 is a particle size distribution chart derived from measurement of another embodiment of the third example of the present invention;

Fig. 10 is a particle size distribution chart derived from measurement of yet another embodiment of the third example of the present invention;

Fig. 11 is a particle size distribution chart derived from measurement of an embodiment of the fourth example of the present invention;

Fig. 12 is a particle size distribution chart derived from measurement of a further embodiment of the fourth example of the present invention;

Fig. 13 is a particle size distribution chart derived from measurement of yet another embodiment of the fourth example of the present invention;

Fig. 14 is a particle size distribution chart derived from measurement of the fifth example of the present invention;

Fig. 15 is a block diagram showing the structure of the second example of the present invention;

Fig. 16 is a decomposed side-view drawing showing the structure of the generator in Fig. 15; and

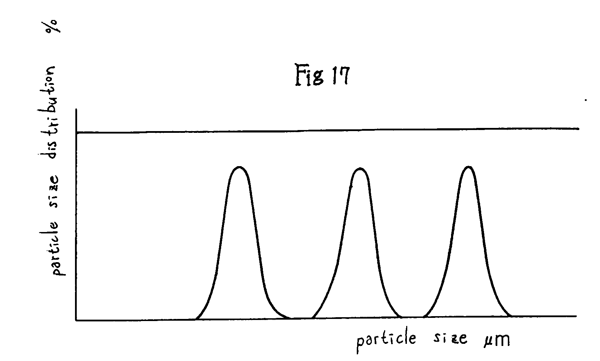

Fig. 17 is an explanatory diagram of particle size distribution.

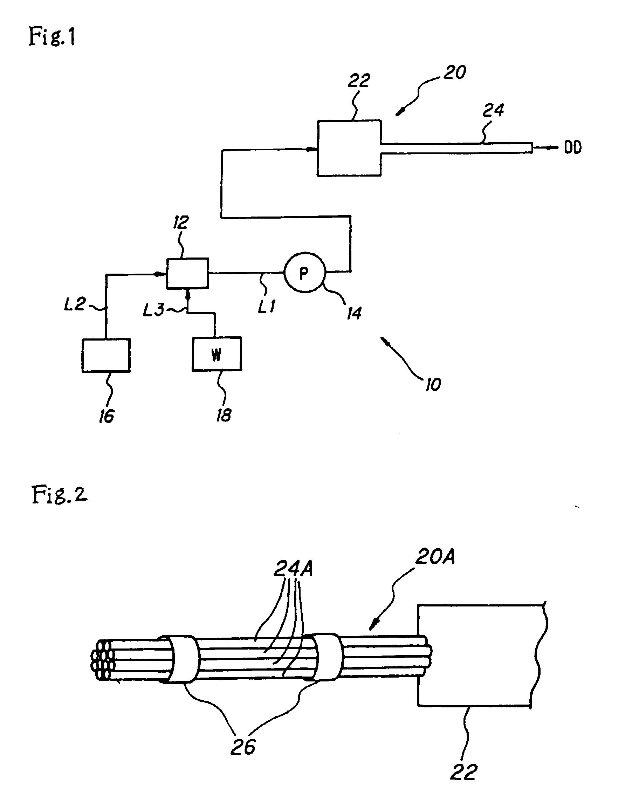

In Fig. 1, reference numeral 10 indicates a first embodiment of the apparatus (particulating apparatus) for particulating according to the present invention. The apparatus 10 has: a reservoir 12 to which a substance to be particulated and water (the liquid) are supplied; a flow-amount and emission pressure variable pump 14; and a particulating component 20, which is a member to particulate the substance. The above mentioned components are arranged in series in the piping L1.

The substance to be particulated, for example oil, is supplied from a supply source 16 through pipe L2 to the reservoir 12. Water as a liquid is supplied through pipe L3 from water supply source 18. A piping system consists of the pipe line L1, L2 and L3.

The particulating component 20 has a chamber portion 22 and a metal portion 24 of small diameter having an inner surface of cylindrical shape (a very small cross-sectional area portion). As is clear from Fig. 1, the chamber portion 22 has a relatively large cross sectional area, or the cross sectional area of the chamber portion 22 is larger than the cross sectional area of the very small cross-sectional area portion 24.

In Fig. 1, the reference DD represents any kind of processing system receiving a mixture of the particulated substance and water from the particulating member 20. In the embodiment of Fig. 1, on particulation processing, the substance to be particulated is supplied from the source 16 through the pipe L2 to the reservoir 12 and water is supplied from the water source 18.

The substance and water supplied to the reservoir 12 are given head by the pump 14 and are supplied to the particulating component 20 through the pipe L1.

At the particulating component 20, cylindrical portion 24 (the very small cross sectional area portion) becomes a generating source of a so-called flow noise during formation of a jet stream. In other words, cylindrical portion 24 operates as a sound source.

The frequency of resonance vibration in the chamber 22 with the cylindrical portion is so high that it corresponds to an ultrasonic vibration (see later example). Thus, once the cylindrical portion 24 operates as a sound source, it resonates with the chamber portion 22 and the liquid in the cylindrical portion 24 and resonates at a high frequency such as that of ultrasonic vibration.

As a result of the high frequency resonance vibration, the substance supplied to the particulating component 20 is subjected so very often to bending stress or shear stress through collision with the walls of the portions 22, 24 or by cavitation effect that a very favourable particulation can be attained.

In Fig. 1, the cylindrical portion 24 is shown as only one small diameter metal pipe but as shown in Fig. 2, it is possible for the particulating component to comprise a combination of a plurality of metal small diameter cylindrical portions 24A bundled together with a band 26 and connected to the chamber 22 (this arrangement is generally designated 20A).

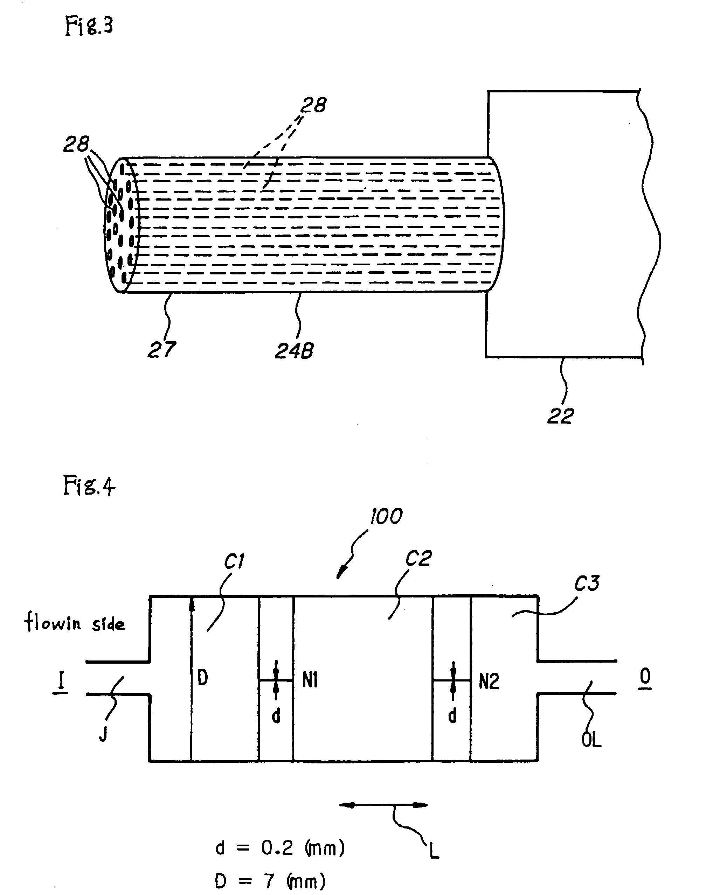

As is shown in Fig. 3, a member designated 24B, may be provided. The particulating component may comprise a cylindrical member 27 whose diameter is larger than the small diameter metal cylindrical portions 24,24A, which in this case are in the form of a plurality of bored through holes 28.

The inner diameter of the plural through holes 28 is shown as the same in Fig. 3, but it is possible to have a plurality of different values for the inner diameters of the through holes, if the substance to be particulated is required to have a plurality of particle sizes. For example, when the cylindrical member 27 is composed of high purity alumina ceramic which has a so-called continuous porous structure, the cylindrical member 27 may have several small holes of about 0.01 mm size. When the ceramic cylindrical member 27 is processed with an electric discharge processing machine, the inner diameter being about 0.3 mm, the cylindrical member can have holes of two kinds of inner diameter (0.01 mm, 0.03 mm).

Fig. 4 refers to a first example of the present invention showing a model of a method of and an apparatus for particulating.

The particulating apparatus, generally designated 100, is provided with an inflow side I, to which water (liquid) and the substance to be particulated (calcium phosphate 10%, a dispersing agent pyrroli sisannarium 0.2%: the inflow particle size is 5.13 μm) are supplied through a piping system (not shown). A connecting member J provided at the inflow side I; three chambers (which correspond to the chamber portion) C1, C2, C3; 2 nozzles N1,N2 (corresponding to the small cross-sectional area portions) installed between the chambers; and an outlet OL (outflow side O) for the mixture of the substance to be particulated and the water.

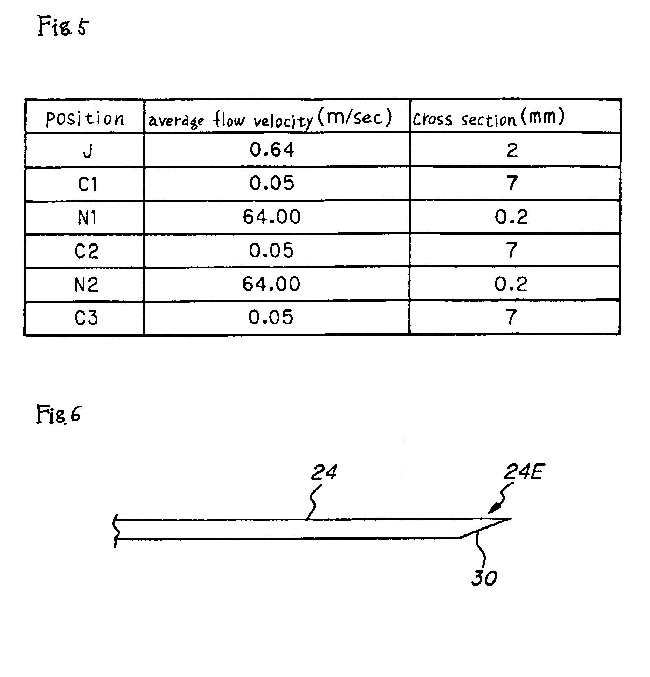

The inner diameter d of each of the nozzles N1 and N2 is 0.2 mm and the inner diameter of each of the chambers C1, C2 and C3 is 7 mm (see Fig. 5). The length of the nozzles N1 and N2 (the length in the direction of arrow L in Fig. 4) is a total of 0.5 mm (though this is not shown in Fig. 4) while the length of the chamber C2 is 20 mm.

As is shown in Fig. 5, the flow velocity in the nozzles N1 and N2 is 64 m/sec while the flow velocity in the chambers C1, C2 and C3 is, calculated from the cross sectional area rate, 0.05 m/sec.

With the above mentioned apparatus, a favourable result is obtained. If particulation is carried out based on conventional cavitation theory, the locations at which bending stress or shear stress is exerted, are only points of N1 and N2. The frequency N, which is equal to the number occurrences of exertion of bending stress or shear stress on the particles, can be derived from the following formula.

$$N = T/\Delta T \qquad (1)$$

In the formula (1), T is the time during which the particles pass through the nozzle, and using LN for the length of the nozzle N1 and N2, U for the velocity of the substance passing through, $T = LN/U$. Substituting the above values into the formula,

$$T = 0.5 \times 10^{-3} (m)/64 \ (m/sec).$$

$\Delta T$ is a cycle of the vibration exerted on the particle and is in accordance with a reciprocal of the resonance frequency (=150 KHz). Substituting values into the formula (1),

$$N=T/\Delta T$$

$$= (0.5 \times 10^{-3}/64)/(1/150 \times 10^{-3})$$

$$= 1.2 \ (times)$$

Supposing that the particulation by the present invention is based on conventional cavitation theory, implies that each particle of the substance is destroyed and particulated sufficiently by only average 1.2 occasions of bending stress or shear stress being exerted on the particle. In other words, considering that the value N=1.2 is too small for the particulation of the particle, it can not but be concluded that the particulation according to the present invention is not based on the conventional cavitation theory.

On the contrary, the value N can be obtained on the assumption that the particulation by the present invention is done through generation of ultra sonic vibration generated from the resonance of the chamber and the very small cross sectional area portion with the liquid. In applying the apparatus in Fig. 4 to the model, it can be considered to be a combination of the device composed of the chamber C1 and the nozzle N1 with the device composed of the chamber C2 and the nozzle N1, N2.

As mentioned above, LC or the length of the chamber C2 (length in the direction of arrow L in Fig. 4) is 0.02 m. A representative velocity at sonic speed is 1500 m/sec. Thus the fundamental frequency F is 1500/ 0.02=75 kHz. The resonance frequency of both devices mentioned above (the device composed of the chamber C1 and the nozzle N1, and the device composed of the chamber C2 and the nozzle N1, N2) is 2F=150 kHz (harmonic frequency).

Therefore, the number N of occurrences of bending stress or shear stress acting the particles in the chamber C2 by the resonance vibration frequency 150 kHz is obtained from formula (1).

Time T during which the particle passes through the chamber C2 (=LC/U, where the length of the chamber C2 is LC and the flow velocity is U) is T=20.0 x 10^{-3} (m) /0.05 (m/sec) because the flow velocity of the liquid in the chamber C2 is 0.5 m/sec (see Fig. 5), while the cycle of the vibration ΔT on the particle is a reciprocal of the resonance frequency, 150 kHz. Substituting the numbers into formula (1), the value N is as follows:

$$N=T/\Delta T$$

$$= (20.0 \times 10^{-3}/0.05)/(1/150 \times 10^{-3})$$

$$= 6 \times 10^{4} \ (times)$$

The number of occurrences of bending or shear stress is a sufficient value for achieving a favourable particulation. From the example, it will be understood that the present invention relates to particulation which is based on the effect of sound or resonance theory.

That the particle size distribution of the particulate material according to the present invention is sharper than has ever been seen according to the conventional technique, agrees with the fact that the occurrences of the exertion of bending stress or shear stress on the particles are extremely frequent.

Fig. 2 relates to a second example of the present invention, wherein an experiment of mixing or emulsification of 20% of oil with 80% of water using the particulation apparatus shown in Fig. 1 was carried out. As a cylindrical portion 24 (the very small cross-sectional area portion), a hypodermic needle of 25 mm length, 0.5 mm inner diameter was used. The tip of the needle 24E was installed such that its inclined surface 30 faced downwards as shown in Fig. 6.

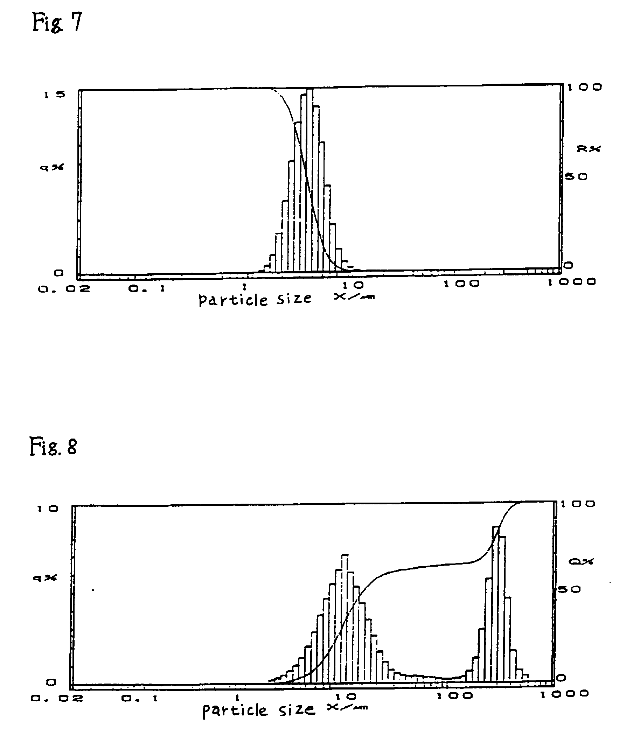

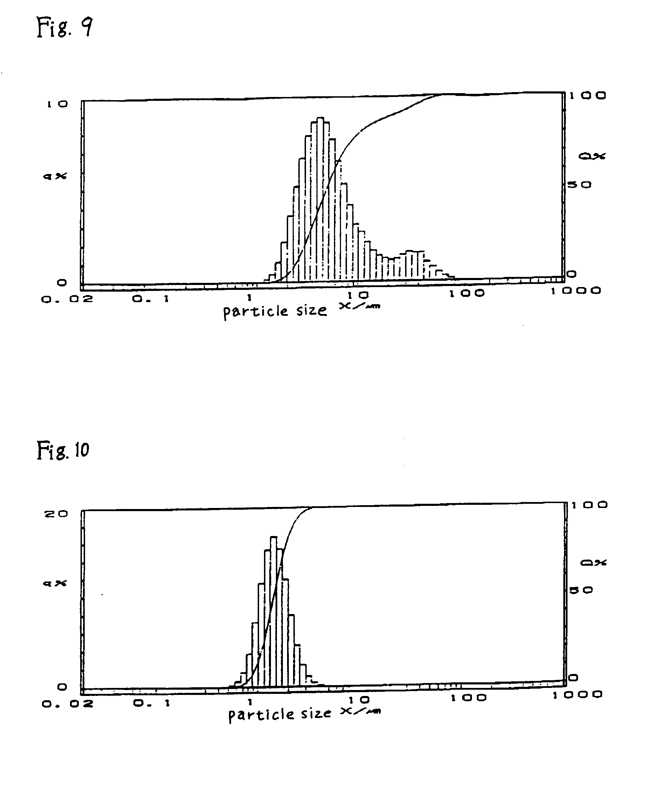

After 3 seconds of stirring and 3 seconds of circulation with a discharge pressure of 10 atm of the pump 14 (see Fig. 1), the measurement of the particle size distribution with a laser diffraction/scatter type particle size distribution meter (a meter sold under the trademark "LA-910" by Horiba Manufacturing Company is used in the example: the particle size distribution measurement instrument is not shown), is shown in Fig. 7.

The measurement result in Fig. 7 shows a sharp and almost normal particle size distribution curve with 3 to 5 μm particulated particle diameter in the centre and that the particulation was carried out extremely favourably.

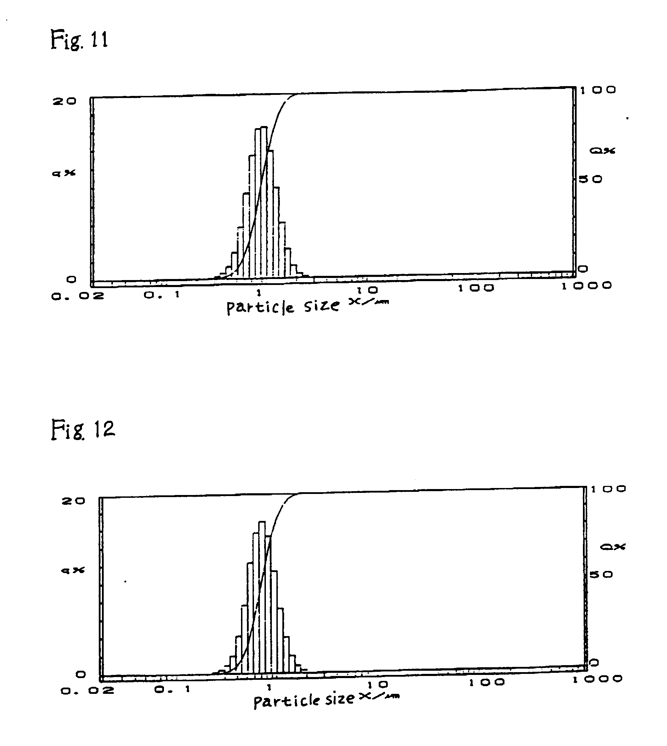

As the third example of the present invention, the same measurement as the second example was carried out, Using the same experimental instrument as the second example for the same sample as the second example, with a pressure of 1 atm., a dispersing time of 1 minute, the inner diameter being 1.2 mm and the length 38 mm. The result of the measurement is shown in Fig. 8.

It can be seen that the particle diameter of the particulated sample forms a normal distribution curve having two very sharp peaks.

In comparison to the result shown in Fig. 8, the result with the same conditions, except a pressure of 3 atm. is shown in Fig. 9, and the result with 10 atm. is shown in Fig. 10. In the case shown in Fig. 8 to Fig. 10, the pressure of the sample and the liquid supplied to the particulating apparatus affects the particle diameter or the particle size distribution.

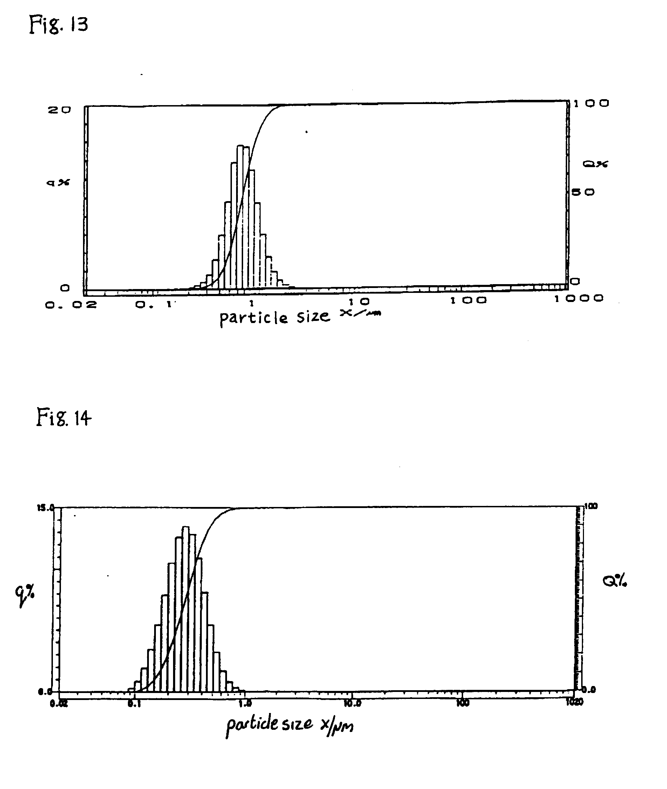

As example four of the present invention, measurement results of experiments, using a needle of inner diameter 0.55 mm, length 25 mm and the same parameters except for pressure are shown. The result for pressure 60 Kgf/cm$^{-2}$ is shown in Fig. 11, for 70 Kgf/cm$^{-2}$ in Fig. 12 and for 90 Kgf/cm$^{-2}$ in Fig. 13, respectively. In this case, pressure does not affect the particle diameter or the particle size distribution, but in all cases, it is understood that there is a very sharp particle size distribution.

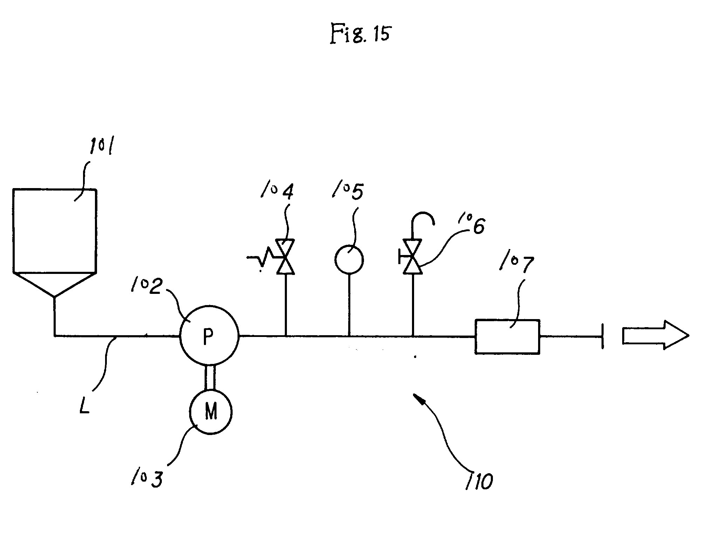

As the fifth example of the present invention, an experiment result using titanium oxide as a sample is shown in Fig. 14. As in the case of oil, very favourable particulation is achieved with a very sharp size distribution curve.

In Fig. 15, the particulating apparatus for example 2 of the present invention is shown, the whole apparatus being generally designated by reference numeral 110. The apparatus 110 has a tank 101 for supplying a substance to be particulated and water (liquid), a flow amount and emission pressure variable pump 102 driven by a motor 103, a relief valve 104 which is used to leak excess pressure, a pressure gauge 105, an air bleed valve 106 for bleeding air from the pipe line, and a generator 107 for particulation processing. All components are connected in series with a piping system L.

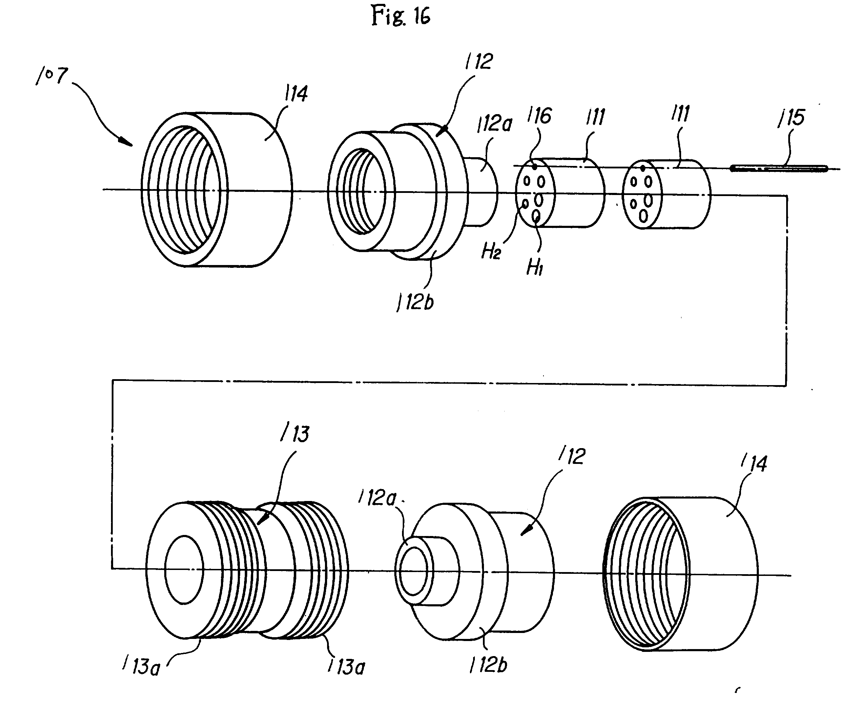

As is shown in an exploded view of Fig. 16, the main part of the generator 107 consists of a small diameter channel member which is divided into two pieces 111, having channels of very small diameter, a casing 113, chamber members 112 and cap nuts 114. The small diameter channel member 111 are pierced with a plurality of straight channels H1, H2 having a cross-sectional area selected so as to obtain a prescribed particle size distribution, and are positioned such that both the right and the left members are correctly aligned by inserting a knock pin 115 into a knock hole 116. The members are inserted into the cylindrical casing 113 which has screw threads 113a on the peripheral surface of both sides. At the left and right side of the casing 113, the chamber members 112 are connected such that a projecting member 112a on one side is inserted into the casing 113 and comes into contact with the small diameter channel member 111. The inner diameter of the chamber 112 has a relatively large cross sectional area and the other side of the chamber 112 is connected with a screw to a pipe which is not shown in the drawing. The large diameter portion 112b on the periphery of the chamber 112 is fixed with a cap nut 114, one side of which is screwed to a screw member 113a on an edge of the casing 113, thus fixing the chamber member 112. In accordance with the present invention, the small diameter channel member can be made by bundling together a plurality of members having channels, and the channels H1, H2 can be prepared in a plurality, and the diameter of the channel may be selected at will.

In the particulation process, a substance to be particulated and water (liquid) are supplied from the tank 101 to the generator 107 by the pump 102, meanwhile, the relief valve 104 works to lower the excess pressure and the air bleed valve 106 eliminates entrained air in the pipe line. In the generator 107, the cross sectional area changes from large at the chamber member 112, to very small at the small diameter channel member, and to relatively large again at the other chamber member 112, wherein particulation is achieved by the cavitation phenomenon through ultra sonic vibration generated by resonance.

The particle size distribution by this method is found to be a sharp narrow range distribution, the center of which varies with various parameters, such as the cross-sectional area of the members. Thus by selecting each cross-sectional area of the straight channels H1, H2, properly, particulation with the prescribed particle size distribution, for example as shown in Fig. 11, i.e. the particulation having a particle size distribution in accordance with the cross sectional area of each straight channel, can be achieved.

As the small diameter channel member 111 is divided into two members and aligned using the knock pin 115, cleaning of the channel is easy and machining of the straight channels H1, H2 is easy and precise when manufacturing the apparatus.

The effects and/or operations of the first example of the present invention are as follows:

(1) Good particulation and very sharp particle size distribution characteristics are obtainable;
(2) It presents a particulation method and apparatus based on an entirely new principle, not only noticing the generation of cavitation as usual, but also considering the effect of sound and/or resonance;
(3) It is possible to determine a particle size distribution (particle size determination);
(4) High cleanability and/or high cleaning efficiency;
(5) Reduced labor-cost for cleaning work by minimizing the contact area with the particulated material;
(6) Extremely easy to promote compacting of the whole apparatus;
(7) Possible to keep manufacturing costs very low, because there is no necessity to use any extra high pressure device or expensive materials such as diamond;
(8) Possible to obtain ultra sonic vibration very easily without using piezoelectric elements or high frequency alternating current, provided that the shape, size and other parameters are specified adequately; and
(9) Usable in a wide range of fields such as dispersing, emulsifying, mixing, stirring and crushing. High utility for wide purposes.

The effects and/or operations of the second embodiment of the present invention are as follows:

(10) Can achieve particulation easily with a relatively simple apparatus, without a large size device and/or high pressure device;
(11) Possibility of particulation with any particle size distribution at will, by selecting the cross sectional area of the channel, and the member provided with channels of very small cross-sectional area can be exchanged easily so that it particulates material to have any prescribed particle size distribution easily; and
(12) Easy to disassemble the members to make cleaning work easy.

**Claims**

1. A method for particulation, wherein a substance to be particulated is mixed with a liquid and particulated, comprising the step of:

passing the substance and the liquid through a chamber member (22;C1,C2,C3;112) having a relatively large cross-sectional area to a member (24;24A;24B;N1, N2;111) provided with portions (24;24A;28;H1,H2) having a very small cross-sectional area;
in said passing step, generating an ultra sonic vibration by resonating the chamber member and the portions having very small cross sectional area with the liquid, thereby repeatedly exerting stress on the substance to be particulated.

2. A method for particulation as claimed in claim 1, wherein the member (24;24A;24B;N1,N2;111) provided with portions having a very small cross sectional area has a cylindrical inner surface.

3. A method for paticulation as claimed in claim 1 or claim 2, wherein the member (24A,24B;111) provided with portions having very small cross sectional area comprises a plurality of straight channels (24A; 28;H1, H2).

4. Apparatus for particulation by mixing a substance with a liquid and particulating the substance, comprising:

a chamber member (22;C1,C2,C3;112) having a relatively large cross sectional area;
a member (24;24A;24B;N1,N2;111) provided with portions (24;24A;28;H1,H2) having very small cross sectional area; and
a supply system (L1;L) for supplying the substance to be particulated and the liquid to said chamber member and said member provided with the portions having very small cross sectional area,
said chamber member and said member provided with the portions having very small cross sectional area being arranged so as to generate an ultra sonic vibration by resonance of said chamber member and the portions having very small cross sectional area, in order to exert stress repeatedly on the substance to be particulated.

5. Apparatus as claimed in claim 4, wherein said member (24;24A;24B;N1,N2;111) provided with portions having very small cross-sectional area has a cylindrical inner surface.

6. Apparatus as claimed in claim 4 or claim 5, wherein said member (24A;24B;111) provided with portions having very small cross sectional area comprises a plurality of straight channels (24A;28;H1,H2).

7. An ultra sonic vibration generating apparatus, comprising:

a chamber member (22;C1,C2,C3;112) having a relatively large cross sectional area;

a member (24;24A;24B;N1,N2;111) provided with portions (24;24A;28;H1,H2) having very small cross sectional area; and

a supply system (L1;L) for supplying liquid to said chamber member and said member provided with portions having very small cross sectional area,

said chamber member and said member provided with the portions having very small cross sectional area being arranged so as to generate an ultra sonic vibration by resonance of said chamber member and the portions having very small cross sectional area with said liquid.

8. A method for particulation, wherein a substance to be particulated is mixed with a liquid and particulated, comprising the step of:

passing the substance to be particulated and the liquid through a chamber member (22;112) having a relatively large cross sectional area to a small diameter channel member (24B;111) having channels (28; H1,H2) of a very small cross sectional area, so that when the liquid passes through the chamber member and the plurality of channels having very small cross-sectional area, the substance is particulated;

the channels of very small cross sectional area in the small diameter channel member being composed of a plurality of straight channels; and

the cross-sectional area of each of the plurality of straight channels is selected so as to correspond to a prescribed particle size distribution.

9. Apparatus for mixing a substance to be particulated with a liquid and particulating the substance, comprising:

a generator (20;107) for particulating the substance; and a supply system (L1;L) for supplying the substance and the liquid to the generator,

said generator including a chamber member (22;112) having a relatively large cross sectional area and a small diameter channel member (24B;111) having channels (28;H1,H2) of very small cross sectional area;

said substance being particulated when the liquid passes through the chamber member and the plurality of channels having very small cross sectional area;

the channels of very small cross sectional area in the small diameter channel member comprising a plurality of straight channels; and

the cross sectional area of each of said plurality of straight channels corresponding to a prescribed particle size distribution of the particulated substance.

10. Apparatus as claimed in claim 9, wherein said generator (107) comprises two divided separable small diameter channel members (111), which members are in alignment with each other, the small diameter channel members engaging respective front and rear chamber members (112).

11. A method for particulation of a substance, the substance being mixed with a liquid, wherein the mixture is supplied to a chamber of relatively large cross-sectional area and passes from the chamber through a portion of very small cross-sectional area.

Fig.1

Fig.2

Fig.3

Fig.4

d = 0.2 (mm)

D = 7 (mm)

Fig. 5

| Position | average flow velocity (m/sec) | cross section (mm) |
|----------|-------------------------------|---------------------|
| J | 0.64 | 2 |
| C1 | 0.05 | 7 |
| N1 | 64.00 | 0.2 |
| C2 | 0.05 | 7 |
| N2 | 64.00 | 0.2 |
| C3 | 0.05 | 7 |

Fig. 6

24    24E

30

Fig. 7

Fig. 8

Fig. 9

Fig. 10

Fig. 11

Fig. 12

Fig. 13

Fig. 14

Fig.15

Fig. 16

Fig 17

European Patent Office

**EUROPEAN SEARCH REPORT**

Application Number

EP 97 30 4673

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 4 266 879 A (MCFALL RICHARD T) 12 May 1981<br>* column 3, line 31-66; figures *<br>--- | 1-9,11 | B01F11/02<br>B01F3/08<br>B01J19/10 |
| X | US 3 645 504 A (JACKE STANLEY E) 29 February 1972<br>* column 2, line 26 - column 3, line 37; figure 2 *<br>--- | 1,4,7,11 | |
| X | DE 27 12 603 A (DEBERGHE & LAFAYE) 22 September 1977<br>* page 9, paragraph 2; figure 2 * | 1,4,7,11 | |
| Y | | 10 | |
| Y | DE 25 06 824 A (VISH MINNO GEOLOSHKI INST) 21 August 1975<br>* page 3, paragraph 2; figure *<br>--- | 10 | |
| A | | 1-9,11 | |
| X | GB 1 063 700 A (SONIC ENGINEERING CORP.) 30 March 1967<br>* page 3, line 21-61; figures *<br>--- | 1,4,7,11 | |
| A | US 4 306 816 A (FOLLAND ROY E) 22 December 1981<br>* column 2, line 35-52; figure *<br>--- | 1-11 | TECHNICAL FIELDS SEARCHED (Int.Cl.6)<br><br>B01F<br>B01J |
| A | DE 28 46 462 A (ENERGY & MINERALS RES CO) 26 April 1979<br>* the whole document *<br>----- | 1-11 | |

The present search report has been drawn up for all claims

| Place of search | Date of completion of the search | Examiner |
|---|---|---|
| MUNICH | 2 October 1997 | Persichini, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (F04C01)